# EUROPEAN PATENT APPLICATION

(11) **EP 4 848 706 A1**
(43) Date of publication of application: **02.12.2026**
(21) Application number: 25382556.6
(22) Date of filing: 30.05.2025
(51) Int. Cl.: H04N 5/265, G06T 7/292, G11B 27/031, H04N 5/268, H04N 5/77, H04N 7/18, H04N 21/218, H04N 21/234, H04N 23/61, H04N 23/90

(54) **A TRACKING SYSTEM FOR GENERATING A CONTINUOUSLY TRACKED VIDEO OUTPUT OF A MOVABLE OBJECT ALONG A PATH**

(71) Applicant: MXV Inc., Newark, DE 19713 (US)
(72) Inventor: Burnett, Michael, 08018 Barcelona (ES)
(74) Representative: Cooley (UK) LLP

(57) **Abstract**

A tracking system for generating a continuously tracked video output of a movable object along a path where the system comprises, a plurality of cameras situated at a predetermined distance along the path, at least a first camera of the plurality of cameras configured to capture a first frame where the object is displayed and at least a second camera of the plurality of cameras configured to capture a second frame where the object is displayed within a time frame, and a control means configured to control at least the first camera and the second camera and to receive the first frame and the second frame, wherein the control means are further configured to compile an output video comprising the first frame and the second frame.

## Description

### Field of the invention

The present invention relates to the field of automated video capture systems, especially those designed for synchronized multi-camera arrays where moving objects are tracked to produce seamless, continuous video footage of said objects.

### Background of the invention

For broadcasting of high-speed competitions such as motorsports (for example, Formula 1) and winter sports (for example, Skiing) there are limited recording systems used to follow and record a participant or a group of participants as they move through predefined paths or racing circuits. The object of these recording systems is to produce seamless continuous shot of the participant or participants as they travel along the predefined paths. In the present application, high-speed sports are considered as those where maximum speeds exceed the maximum speed a human can reach without the aid of external devices, that is, the maximum human sprinting speed which is approximately 45 km/h.

The current recording systems employed to produce seamless video recordings of specific participant or participants along predefined paths include a camera on a flying device, for example, a helicopter or drone. The flying devices fly along the predefined path and the camera is oriented such that the field of view contains the desired participant or participants. As these recording systems travel along predefined path following the desired participant or participants, seamless videos can be produced for the viewer.

However, the aforementioned recording systems suffer from three primary limitations. Firstly, there is the high cost of the flying devices and in case of using a helicopter or similar manned aircraft this cost is increased by the cost of the pilot salary. Secondly, the safety of the participants may be compromised if there is a loss of control of the flying devices and they fall onto the predefined path or they collide with the participants. Such a scenario could result in cancelling of the event, participant injury and/or loss of life. To avoid any accidents, the flying devices must operate at significant distances from the participants. Thirdly, it is very difficult for the flying devices to follow the participant or participants such that a similar trajectory is defined by both the flying device and participant or participants. Additionally, other drawbacks of flying devices could be the ones derived from difficult weather situations or places difficult to access, for example, tunnels. As such, the viewing angle of the participant or participants taken by the camera in the continuous shot varies along the path making it difficult to produce a subject-mounted perspective effect which is often desired by viewers.

As such, there is an evident need for a system that can overcome the aforementioned limitations such that the effect of a continuous shot of the participant or participants is maintained through cheaper and safer means. Additionally, there is a need to provide a system that can not only provide a continuous shot effect but also a subject-mounted perspective effect to improve the viewer experience.

### Summary of the invention

To address the identified needs, the present invention provides a tracking system and a method for generating a continuously tracked video output of a movable object along a path as disclosed hereby.

In a first inventive aspect, the invention provides *a tracking system for generating a continuously tracked video output of a movable object along a path, the system comprising:*
- *a plurality of cameras situated at a predetermined distance along the path, and at least a first camera of the plurality of cameras configured to capture a first frame where the object is displayed, and at least a second camera of the plurality of cameras configured to capture a second frame where the object is displayed within a time frame;*
- *control means configured to control at least the first camera and the second camera and to receive at least the first frame and the second frame, wherein the control means are further configured to compile an output video comprising at least the first frame and the second frame.*

Throughout the present document, it will be understood that an object is any moving body, such as a motor sport vehicle or an athlete that moves faster than the fastest runner on earth, e.g., a professional downhill ski racer.

In a particular embodiment of the invention, the plurality of cameras comprises photosensitive cameras for capturing images or video by recording light onto a photosensitive surface comprised by each camera.

Please note that as the object travels along the path, the tracking system of the invention is configured to provide a video which comprises a continuous supply of single frames in which the object is displayed and which are captured by different cameras of the plurality of cameras. As disclosed, within the plurality of cameras, at least the first camera and the second camera are separated along the path at a predetermined distance which depends partly on the desired projection system on which the selected captured frames will be projected.

More specifically, attention should be addressed to the fact that there are different projection systems which have different frame rates. For example, traditional film projectors can use 24 frames per second [fps], some television systems can use 30 [fps] or 60 [fps], while modern digital projection systems can support 120 [fps]. The inverse of the frame rate (frames per second) is commonly referred to in the state of the art as the time frame (seconds per frame). Considering the previous example frame rates, the time frame for traditional film would be 1/24 seconds per frame, for television systems it would be 1/30 or 1/60 seconds per frame and for modern digital systems it would be 1/120 seconds per frame. There also exist shorter time frames than those described such as for slow-motion projection systems.

With regard to the placement of the plurality of cameras, in a particular embodiment of the invention, the field of view of each camera is oriented towards the path in order to capture accurately a frame in which the object is displayed.

Please note that the first frame taken by the first camera can be considered to define a t₀. The second frame captured by the second camera is captured within a time frame T from t₀, where the time frame T is defined by the desired projection system. In this way, each camera is configured to provide one frame in which the object appears as it travels along the path and moves by the first camera, the second camera, and additional cameras.

In a particular embodiment of the invention, *the predetermined distance is based on the expected speed of the object along the path and the time frame.*

In this regard, two variables that affect the predetermined distance are the time frame T and the expected speed or average speed of the object as it travels past a camera, where the object defines a direction of travel along the path. To initiate establishing a predetermined distance a starting location on the path from which to calculate the predetermined distance can be chosen, either arbitrarily, or, as a point of interest. As an example, a first camera can be positioned separated from said starting location on the path and oriented essentially pointing to the path. Preferably, the first camera can be positioned separated from the starting location on the path and oriented such that an optical axis of the first camera intersects the path at the chosen starting location, thus forming a first intersection point.

Within the scope of the invention and for the sake of the clarity, the feature "optical axis" can be defined as an imaginary straight line that defines the path along which light travels through an optical system, such as a lens or a set of lenses of the camera. It normally passes through the centers of curvature of the optical elements (e.g. lenses or mirrors) and is the line of symmetry for rotationally symmetric systems. Also, optical axis can be understood as the imaginary axis that passes through the geometric center of the field of view of each camera.

Next, it is necessary to estimate the expected speed of the object downstream said first intersection point. To this end, for example, in Formula 1 races, the displacement with respect to time can be modelled. This model can take into account constant acceleration, jerk (first derivative of acceleration), snap (second derivative of acceleration), and so on, that is, integral kinematics. Other methods for predicting the expected speed of objects can be used.

Based, for example, on the displacement model, the expected speed of the object for a given time frame T downstream the first intersection point can be calculated. With the expected speed of the object predicted downstream the first intersection point and the time frame T, a predetermined distance along the path from the first intersection point at which a second camera optical axis intersection point with the path should be defined can be determined. The second camera is then placed along the path such that its optical axis intersects the path forming the second camera optical axis intersection point. This process is then carried out iteratively along the entire path until sufficient cameras are in place such that each camera is configured to capture at least one frame that displays the object at a time defined by a multiple of the desired time frame T.

More generally, with the first intersection point defined and the model for estimating expected objects speeds, the predetermined distances for where subsequent camera optical axis intersections with the path should be formed can be predicted. Each new camera optical axis intersection point with the path to be defined is distanced from an upstream camera optical axis intersection point with the path that has already been defined by a predetermined distance along the path. The predetermined distance is based on the expected speed downstream the defined camera optical axis intersection point with the path, during the time frame T, and is measured along the path from the defined camera optical axis intersection point with the path in the direction of travel.

In an alternative embodiment, the expected speed of the object is predicted by using the historical average speed data of the object along the path, and the distance between consecutive cameras in the direction of travel is calculated in the same way as described in the previous paragraph.

For example, in Formula 1 an initial straight sector of the circuit could be covered by a first array of 8 cameras where one camera is placed at the pole position which would be considered a point of interest and oriented such that its optical axis defines an intersection point with the path. In this scenario, with 8 cameras, in Table I shown below, it has been provided an offset of predetermined distances between consecutive camera optical axis intersection points with the path for a projection system frame rate of 30 [fps] and example expected speeds or average speeds of the vehicle from the race start, where the vehicle race start speed is 0 [m/s]. The time column represents multiples of the time frame, 1/30 seconds per frame (0.033 seconds per frame), of the projection system. The predetermined distances for each camera optical axis intersection point with the path is given as the distance along the path with respect to the closest camera optical axis intersection point with the path upstream the direction of travel of the vehicle. Camera I has been chosen to be situated at the pole position, as such, the camera I optical axis has been configured to intersect the starting location on the path. The camera I optical axis intersection point with the path has no predetermined distance with respect to any other camera optical axis intersection point with the path and acts as the reference point from which to calculate a predetermined distance along the path of a camera II optical axis intersection point with the path. Analogously, the camera II optical axis intersection point with the path acts as the reference point for calculating a predetermined distance along the path of a following camera III optical axis intersection point with the path, and so forth with the remaining cameras IV-VIII.

**Table I**

| **Camera** | **Time (s)** | **Expected Speed (m/s)** | **Predetermined distances (m)** |
|---|---|---|---|
| I | 0.000 | 0.00 | N/A |
| II | 0.033 | 0.56 | 0.018 |
| III | 0.067 | 1.11 | 0.037 |
| IV | 0.100 | 1.67 | 0.055 |
| V | 0.133 | 2.23 | 0.074 |
| VI | 0.167 | 2.78 | 0.092 |
| VII | 0.200 | 3.34 | 0.110 |
| VIII | 0.233 | 3.90 | 0.129 |

It may occur that the object does not follow the displacement model correctly, that is, that the object travels less distance than initially modeled (lower than expected speed) or more distance than initially modeled (higher than expected speed). When the object travels less distance or slower than expected, the first frame and second frame may be taken by the same camera. When the object travels more distance or faster than expected the second frame may be taken by a camera that is not consecutively downstream from the first camera that takes the first frame. For example, referring to the 8-camera example for Formula 1, when the vehicle travels slower than expected between camera II and camera III, camera II will take two frames of the object within a time frame, and when the vehicle travels faster than expected between camera II and camera III, camera II takes the first frame and camera IV takes the second frame within the time frame.

The previous Formula 1 example for 8-cameras along the initial straight sector of a race demonstrates how camera optical axis intersection points with the path would be separated by gradually increasing distances as the expected speed of the object gradually increases. In Table II, below, we have provided another scenario where the object travels at a constant speed in a straight portion of the path covered by 5 cameras. Throughout said straight sector the expected speed is predicted to be a constant 108 km/h for each time frame downstream each respective camera optical axis intersection point with the path. As it is not the beginning of the race, we will take an arbitrary time tₛ as the time at which camera I captures a first frame where the object is displayed. Additionally, we will not define an expected speed for the time frame between a nearest upstream camera from camera I (not considered in Table II), and, as such, the predetermined distance of the camera I optical axis intersection point with the path with respected to a nearest upstream camera optical axis intersection point with the path is not defined.

**Table II**

| **Camera** | **Time (s)** | **Expected Speed (m/s)** | **Predetermined distances (m)** |
|---|---|---|---|
| I | tₛ | Undefined | Undefined |
| II | tₛ + 0.033 | 30.0 | 1 |
| III | ts + 0.067 | 30.0 | 1 |
| IV | ts + 0.100 | 30.0 | 1 |
| V | ts + 0.133 | 30.0 | 1 |

In a preferred embodiment of the invention, *the predetermined distance is the product between the expected speed of the object along the path and the time frame.* In other words, this is the equation applied in order to calculate the predetermined distances downstream each respective camera optical axis intersection point with the path within the time frame. Given this relationship, the total number of cameras of the tracking system will depend on the length of the path and the cumulative number of predetermined distances needed for the camera optical axis intersection points with the path.

In a particular embodiment of the invention, *the control means comprises an AI model configured to identify the object within at least the first frame and the second frame.*

Please note that the Al model can be trained to detect the object within at least the first frame and the second frame. The Al model can be powered by a Convolutional Neural Network, CNN, in order to provide a more accurate identification of the object within the respective frame. Sometimes a captured frame may contain a plurality of objects when said objects are moving at similar expected speeds. The Al model may be configured to identify each one of the plurality of objects displayed in each frame and track a desired object among the plurality of objects in order to produce an output video of the desired object.

More specifically, when the tracking system is required to track two or more objects there are various solutions that can be employed. These solutions allow the tracking system to produce multiple output videos for multiple tracked objects, that is one output video per tracked object.

A first solution could consist in situating along the path a specific array of cameras for each object expected speed or desired frame rate. This solution is particularly useful if the expected speeds of each object are substantially different and would not require the use of an Al model as the configuration of the camera optical axis intersection points with the path according to the predetermined distances ensures that, when the objects travel as modeled, each object is displayed within one frame captured by the plurality of cameras.

A second solution could consist in situating along the path an array of cameras, with their respective camera optical axis intersection points with the path, where the predetermined distances are calculated for the object that travels the slowest of the two or more objects. As the distance between cameras would be smaller with respect to the distances between cameras if they had been arranged for any of the other faster objects, a continuous shot effect for all the objects is ensured.

In a preferred embodiment, the Al model is used to assist in the capturing of frames when the actual speed of the two or more objects deviates from the predicted expected speed. This enables the tracking system to generate continuous shot effect output videos for any of the camera configurations along the path thus far described. Additionally, as the Al model tracks objects from one frame to another object speed can be estimated and advance notice can be given to the system about where to expect the objects within upcoming frames. This will enable speeding up of processing time for object recognition withing frames.

In the most common sport scenario where the two or more objects to be identified are travelling at substantially similar expected speeds, sometimes the captured frames will include more than one object to be identified. For that reason, a third solution could be based on using the Al model to identify each one of the objects within the frames. With each object identified, zoom/crop, and other frame manipulating techniques, could be used to generate output videos for each object such that a continuous video effect could be achieved.

In a preferred embodiment of the invention, *the optical axis of the at least the first camera or the second camera is configured to be oriented at a predefined angle with respect to the path.*

In a particular embodiment, the plurality of cameras and their respective optical axes are oriented at a constant predetermined angle with respect to the path. As was stated before, the axis that passes through the geometric center of the field of view of each camera is referred to as the optical axis, and each optical axis is preferably oriented such that it forms a consistent angle with respect to the path from a subject-mounted perspective. This type of orientation, when each of the cameras of the plurality of cameras is placed along the path on one specific side, can allow the generation of output videos that achieve a continuous shot effect and a subject-mounted perspective effect perpendicular to the object, similar to a dolly camera travelling parallel to the object along the path.

Regarding optical axis orientation it is beneficial to define a global universal coordinate system (UCS) with its origin (0,0,0) centered at a point of interest, for example, the starting line or finish line of a race track. The XY plane of the global UCS defines a horizontal plane and the z-axis defines the elevation. Additionally, each camera optical axis can be considered to extend from a lens geometric center, and, at each lens geometric center the origin of a local UCS with the same orientation as the global UCS is centered. Each optical axis defines a unit optical axis direction vector and the direction of travel defines a continuous set of unit direction of travel vectors at each optical axis intersection point.

With these definition in place, in a preferred embodiment, each optical axis is oriented such each unit optical axis direction vector forms an acute angle with each corresponding unit direction of travel vector defined at each intersection point. This orientation ensures that as an object travels past each optical axis intersection point a rear part of the object is visible. For example, in Formula 1, the rear part of the vehicle would be visible. Preferably, the acute angle formed between each unit optical axis direction vector and its corresponding unit direction of travel vector is constant. This orientation would generate a continuous shot effect where the vehicle is viewed from behind as it advances in the direction of travel.

In another preferred embodiment, each optical axis is oriented such each unit optical axis direction vector forms an obtuse angle with each corresponding unit direction of travel vector defined at each intersection point. This orientation ensures that as an object travels past each optical axis intersection point a front part of the object is visible. For example, in Formula 1, the front part of the vehicle would be visible. Preferably, the obtuse angle formed between each unit optical axis direction vector and its corresponding unit direction of travel vector is constant. This orientation would generate a continuous shot effect where the vehicle is viewed from in front as it advances in the direction of travel.

In either of two embodiments of the previous two paragraphs if the optical axis is oriented with an elevation with respect to its corresponding intersection point, that is the corresponding intersection point has a negative z greater than a height of the object, a top-rear view would be achieved when an acute angle is formed between each unit optical axis direction vector and each corresponding unit direction of travel vector and a top-front view would be achieved in the case of an obtuse angle formed between each unit optical axis direction vector and each corresponding unit direction of travel vector.

Thus, the plurality of cameras can comprise a plurality of fields of view which comprise a plurality of camera optical axes. The plurality of camera optical axes can define a plurality of intersection points with the path. Where consecutive intersection points are distanced from each other along the path predetermined distances which are based on the expected speed of the object and the time frame T.

In a particular embodiment of the invention, *the control means are configured to simultaneously initialize the capturing by the first camera and the second camera.*

This embodiment can be advantageous for ensuring a synchronized output of frames by at least both cameras. In a preferred embodiment, the plurality of cameras along the path are initialized simultaneously, resulting in the continuous recording by each camera which enables the system to capture frames of each object along the entire path and output individual videos of each object simultaneously.

In a preferred embodiment the control means are configured to simultaneously initialize the capturing the plurality of cameras.

In a second inventive aspect, *the invention provides a method for generating a continuously tracked video output of a movable object along a path from a tracking system, the system comprising:*
- *a plurality of cameras placed at a predetermined distance along the path and at least a first camera of the plurality of cameras and a second camera of the plurality of cameras are each configured to record at least one frame within a time frame;*
- *control means configured to control at least the first camera and the second camera; wherein the method comprises the following steps*
- *capturing a first frame by the first camera where the object is displayed in the first frame;*
- *capturing a second frame by the second camera within the time frame where the object is displayed in the second frame; and*
- *compiling an output video comprising at least the first and second frame.*

These and other features and advantages of the invention will be apparent from the description of the preferred, but not exclusive, embodiments, which are illustrated by way of non-limiting example in the accompanying drawings.

### Brief description of the figures

The above and other advantages and features will be more fully understood following this detailed description of some example embodiments with reference to the attached drawings. These should be considered illustrative and not limiting.
- Fig. 1 is a schematic top-view of an example tracking system of the invention that comprises five cameras installed along a path.
- Fig. 2 is a schematic representation of the captured frames output by three of the five cameras of the example tracking system of the invention associated with a linear time axis in a first scenario.
- Fig. 3 is a schematic view of a camera with its corresponding optical axis orientation measured by using a local UCS set to zero in the lens geometric center origin of the camera.

### Detailed description of the preferred embodiment

In the following detailed description, numerous specific details are presented in the form of examples to provide a thorough understanding of the relevant teachings. However, it will be apparent to those skilled in the art that the present teachings can be practiced without such details.

All the figures refer to a same embodiment of the present invention without this embodiment being limiting.

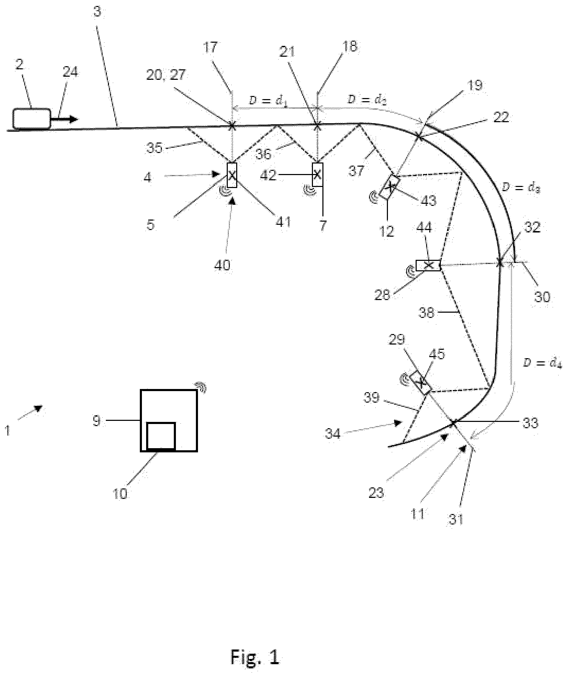

As seen in Fig. 1, the illustrated embodiment provides an example tracking system (1) for generating a continuously tracked video output of a movable object (2) that defines a direction of travel (24) along a path (3). The tracking system (1) comprises a plurality of cameras (4), namely, a first camera (5), a second camera (7), a third camera (12), a fourth camera (28), and a fifth camera (29). The plurality of cameras (4) defines a plurality of geometric centers (40), namely, a first geometric center (41), a second geometric center (42), a third geometric center (43), a fourth geometric center (44), and a fifth geometric center (45).

As seen in Fig. 1, the plurality of cameras (4) also comprises a plurality of fields of view (34), namely, a first field of view (35), a second field of view (36), a third field of view (37), a fourth field of view (38), and a fifth field of view (39). The plurality of fields of view (34) are oriented towards the path (3) and project from a same side of the path. In another embodiment (not shown) the fields of view of a plurality of cameras can project towards the path from either side of the path and/or above the path as long as a continuous shot effect of the object is achieved in the output video. The plurality fields of view (34) comprise a plurality of camera optical axes (11), namely, a first camera optical axis (17), a second camera optical axis (18), a third camera optical axis (19), a fourth optical axis (30), and a fifth optical axis (31). The plurality of camera optical axes (11) intersect with the path (3) such that a plurality of intersection points (23) is defined, namely, a first intersection point (20), a second intersection point (21), a third intersection point (22), a fourth intersection point (32), and a fifth intersection point (33).

It is generally understood that in order to calculate the predetermined distance (D) of the plurality of cameras (4) along the path (3) a starting location should be chosen. In Figure 1, a start point (27) is defined. It can be defined arbitrarily, or, for example, as the location where a race starts. In the case of a Formula 1, this starting location may be chosen as the pole position, that is, the first position on the starting grid. The first intersection point (20) has been configured to match with the start point (27). The predetermined distance (D) of the second intersection point (21) along the path (3) and downstream from the first intersection point (20), is a function of an expected speed (V) of the object (2) downstream the first intersection point (20) within a time frame (T). The time frame (T) is the inverse of a desired projection system frame rate. The predetermined distance (D) of the third intersection point (22) along the path (3) and downstream from the second intersection point (21), is a function of an expected speed (V) of the object (2) downstream the second intersection point (21) within the time frame (T). The predetermined distance (D) of the fourth intersection point (32) along the path (3) and downstream from the third intersection point (22), is a function of an expected speed (V) of the object (2) downstream the third intersection point (22) within the time frame (T). The predetermined distance (D) of the fifth intersection point (33) along the path (3) and downstream from the fourth (32), is a function of an expected speed (V) of the object (2) downstream the fourth intersection point (32) within the time frame (T).

With regard to the tracking system (1) of Figure 1, the predetermined distance (D) along the path (3) of the second intersection point (21) downstream from the first intersection point (20) is calculated as the product between the expected speed (V) of the object (2) downstream the first intersection point (20) within the time frame (T) multiplied by the time frame (T), and, results in d₁. The predetermined distance (D) along the path (3) of the third intersection point (22) downstream from the second (21) is calculated as the product between the expected speed (V) of the object (2) downstream the second intersection point (21) within the time frame (T) multiplied by the time frame (T), and, results in d₂. The predetermined distance (D) along the path (3) of the fourth intersection point (32) downstream from the third intersection point (22) is calculated as the product between the expected speed (V) of the object (2) downstream the third intersection point (22) within the time frame (T) multiplied by the time frame (T), and, results in d₃. The predetermined distance (D) along the path (3) of the fifth intersection point (33) downstream from the fourth intersection point (32) is calculated as the product between the expected speed (V) of the object (2) downstream the fourth intersection point (32) within the time frame (T) multiplied by the time frame (T), and, results in d₄.

These distances, d₁, d₂, d₃, and d₄ between consecutive intersection points of the plurality of intersection points (40), ensure that the object (2) will pass by the respective camera field of view when a frame is required by the projection system according to the projection system frame rate supposing the object (2) travels at the expected speeds (V). Additionally, as seen in Figure 1, the plurality of geometric centers (40) are separated from the path a fixed perpendicular distance from the path, and the plurality of fields of view (34) are substantially similar among the plurality of cameras (4) although this is not reflected graphically in Figure 1 to improve the readability.

As can be seen in Figure 1, the tracking system (1) also comprises a control means (9) which is connected to the plurality of cameras (4) either by wired means or wireless means.

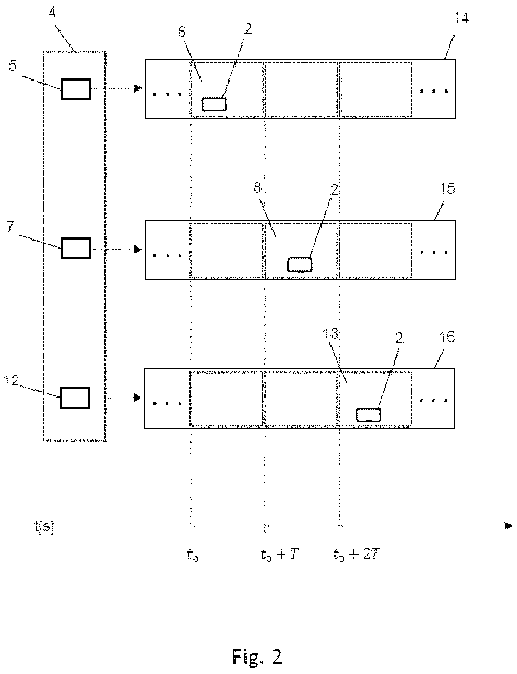

According to Figure 2, the object (2) travels along the path (3) according to the expected speed (V) downstream from each of the plurality of geometric centers (40). The plurality of cameras have been initialized simultaneously such that they all generate continuous video output. In particular, the first camera (5) generates a first video (14), one frame of which is the first frame (6) where the object (2) is displayed defining a time t₀ = 0 [s]. The second camera (7), generates a second video (15), one frame of which is the second frame (8) where the object (2) is displayed. Said second frame (8) is captured within a time frame (T) from the first frame (6), that is, at time t₀+T [s]. The third camera (12), generates a third video (15), one frame of which is the third frame (13) where the object (2) is displayed. Said third frame (13) is captured within a time frame (T) from the second frame (6), that is, at time t₀+2T [s]. The control means (9) are configured to receive from the first camera (5), the second camera (7), and the third camera (12) the first frame (6), the second frame (8) and the third frame (13), respectively, and the control means (9) are configured to compile an output video comprising the first frame (6), the second frame (8) and the third frame (13).

In Figure 1 it is shown that the control means (9) comprise an Al model (10) configured to identify the object (2) within the first frame (6), the second frame (8) and the third frame (13) It is also shown that the plurality of camera optical axes (11) are oriented at approximately 90º with respect to the path (3) from a bird's a view. This orientation allows the generation of output videos by the tracking system (1) that achieve a continuous shot effect and a subject-mounted perspective effect perpendicular to the object (2), similar to a dolly camera travelling parallel to the object (2).

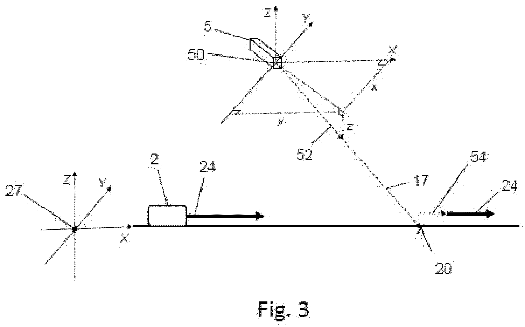

In Figure 3, a possible way for defining the orientation of plurality of camera optical axes (11) is provided. In first place, a global universal coordinate system (UCS) has been defined with its origin (0,0,0) centered the starting location (27). The XY plane of the global UCS represents a horizontal plane and the z-axis represents elevation. The first camera (5) defines a first lens geometric center (50) from which the first camera optical axis (17) extends until intersecting the path (3) at the first intersection point (20). A first local UCS, with the same orientation as the global UCS, is represented with origin centered at the first lens geometric center (50). The first camera optical axis (17) defines a first unit optical axis direction vector (52) and the direction of travel (24) defines a first unit direction of travel vector (54) at the first intersection point (20). In Figure 3a, the first camera optical axis (17) has been oriented such that the angle it forms with the first unit direction of travel vector (54) is acute. This orientation ensures that as the object (2) travels past the first intersection point (20) a rear part of the object (2) is visible.

The plurality of camera optical axes (11) can be oriented such that each unit optical axis direction vector and its corresponding unit direction of travel vector defined at each intersection point is acute or obtuse depending on what view of the object (2) is desired. When the angle is acute, a rear view of the object is achieved and when the angle is obtuse a frontal view of the object is achieved.

## Claims

1. A tracking system (1) for generating a continuously tracked video output of a movable object (2) along a path (3), the system comprises:
- a plurality of cameras (4) situated at a predetermined distance (D) along the path (3), and at least a first camera (5) of the plurality of cameras (4) configured to capture a first frame (6) where the object (2) is displayed, and at least a second camera (7) of the plurality of cameras (4) configured to capture a second frame (8) where the object (2) is displayed within a time frame (T); and
- control means (9) configured to control at least the first camera and the second camera and to receive the first frame (6) and the second frame (8), wherein the control means (9) are further configured to compile an output video (8) comprising the first frame (6) and the second frame (8).

2. The tracking system (1) according to claim 1, wherein the predetermined distance (D) is based on the expected speed of the object (2) along the path (3) and the time frame (T).

3. The tracking system (1) according to the previous claim, wherein the predetermined distance (D) is the product between the expected speed of the object (2) along the path (3) and the time frame (T).

4. The tracking system (1) according to any of the previous claims, wherein the control means (9) comprise an Al model (10) configured to identify the object (2) within the first frame (6) and the second frame (8).

5. The tracking system (1) according to any of the previous claims, wherein at least the first camera or the second camera comprise a camera optical axis (11) which is configured to be oriented at a predefined angle with respect to the path (3).

6. The tracking system (1) according to any of the previous claims, wherein the control means (9) are configured to simultaneously initialize the capturing by the first camera (5) and the second camera (4).

7. A method for generating a continuously tracked video output of a movable object (2) along a path (3) from a tracking system (1), the system (1) comprises:
- a plurality of cameras (4) placed at a predetermined distance (D) along the path and at least a first camera (5) of the plurality of cameras (4) and a second camera (7) of the plurality of cameras (4) are configured to record at least one frame within a time frame (T);
- control means (9) configured to control at least the first camera (5) and the second camera (7);
wherein the method comprises the following steps:
- capturing a first frame (6) by the first camera (5) where the object (2) is displayed in the first frame (6);
- capturing a second frame (8) by the second camera (7) within the time frame T where the object (2) is displayed in the second frame (8); and
- compiling an output video comprising at least the first and second frame (6, 8).
